# EUROPEAN PATENT APPLICATION

(11) **EP 4 207 015 A1**
(43) Date of publication of application: **05.07.2023**
(21) Application number: 22216458.4
(22) Date of filing: 23.12.2022
(51) Int. Cl.: G06Q 10/0631

(54) **CREATING A WORKFLOW FROM MULTIPLE DISPARATE WORKFLOW SYSTEMS LEVERAGING PREDICTIVE ACTIONABLE INSIGHTS FOR EQUIPMENT**

(30) Priority: 28.12.2021 US 202163294129 P
(71) Applicant: Carrier Corporation, Palm Beach Gardens, FL 33418 (US)
(72) Inventor: SUBHASIS, Mandal, Varthur Hobli, Bangalore - 560035 (IN); EZHILAN, J, Varthur Hobli, Bangalore - 560035 (IN); PRASANNA, Kumar Narayana, Varthur Hobli, Bangalore - 560035 (IN); ARNAB, Das, Varthur Hobli, Bangalore - 560035 (IN)
(74) Representative: Dehns

(57) **Abstract**

A method (700) of streamlining multiple disparate workflows generated by equipment including: receiving (704) workflow trigger sources from the equipment; generating (706) two or more disparate workflow system in response to the workflow trigger sources; transforming (708) the two or more disparate workflow systems into a single unified workflow; and performing (710) the unified workflow for the equipment.

## Description

### BACKGROUND

The present invention generally relates to managing equipment and optionally buildings, and more specifically to a system and method for streamlining multiple disparate workflows. The system and method may be utilised for generating a work flow system for managing equipment and buildings using IOT data. The present invention may be in the form of an IOT (Internet of Things) solution.

Buildings, both residential and commercial, have a plurality of equipment. Such equipment offer similar services but are manufactured by different manufacturers, have different models and sizes. To predict failure or optimized operations of the equipment, it is important to understand the behavior of the equipment and identify reasons for a particular behavior of an equipment. The behavior of equipment can differ in many aspects. One aspect is whether an equipment is able to maintain a particular temperature under different environmental conditions which is different from its behavior related to whether the equipment is able to perform such functionality efficiently or without compromising its health. Also, the characteristics and behavior of the equipment continuously vary and need to be normalized over a desired time duration to make it usable. Moreover, various kinds of behaviors of equipment may overlap with each other with an aim to achieve a balance between their objectives. Overlapping behaviors of equipment may lead to misidentification or late identification of the right action that is required to be taken. Thus, defining a system due to different behavioral aspects of the equipment, where each of the behaviors for achieving different objectives can be isolated and then quantified within expected parameters is a tedious process. Further, to achieve a balance between all behavioral aspects that does not lead to failure of any objective, is a further complex process.

In addition, existing solutions are incapable of handling anomalous behavior of the equipment as soon as the equipment develop issues in performance. Consequently, avoiding non-comprehensive or late repairs lead to repeated failures, repairs only at breakdown, reduced lifecycle and increased maintenance cost. Moreover, in a typical site management system, alarms and fault detection and diagnostics (FDD) are typical solutions of identifying problems of the equipment before complete failure and are used for triggering workflows which need immediate attention. However, such alarms have the well-known problem of huge false positives, not being able to identify the real reason for which the symptom crosses threshold and also triggering just before failure of the equipment making it very reactive.

Disparate systems are designed for different types of users, such as, for example, end users, remote technicians, field technicians, or any other end user with respective workflow systems. Different trigger sources initiate workflows in disparate systems (e.g., complaints, planned service requests, alarms, failures, predictions etc.). Workflow systems are designed to achieve objectives of improving comfort, compliance, health, and safety for an end user, performance of the equipment while there are separate workflows for reducing energy usage and maintenance cost for the equipment. These objectives are sometimes contradictory to each other and have substantial overlap.

These workflows also run in disparate systems and are independent of each other and create duplicate work items, cross purpose work items, and lead to a substantial waste in resources both from labor, consumables and parts required for upkeep of the equipment. In some extreme cases this also results in reduction of equipment life due to improper maintenance, operation or failure of critical components of the equipment.

### BRIEF DESCRIPTION

According to a first aspect of the invention, a method of streamlining multiple disparate workflows generated by equipment is provided. The method including: receiving workflow trigger sources from the equipment; generating two or more disparate workflow systems in response to the workflow trigger sources; transforming the two or more disparate workflow systems into a single unified workflow; and performing the unified workflow for the equipment.

Transforming the two or more disparate workflow systems into the single unified workflow may further include: removing any aspects of the two or more disparate workflow systems that are duplications

The method may include translating each of the two or more disparate workflow systems into a common uniform process nomenclature.

The method may include categorizing each of the two or more disparate workflow systems.

Transforming the two or more disparate workflow systems into the single unified workflow may further include: arranging the two or more disparate workflow systems into a sequence having a beginning and an end that bookends the single unified workflow and defines in what order the unified workflow will operate.

The method may include determining an effectiveness of the unified workflow.

The method may include reorganizing the unified workflow based on the effectiveness of the unified workflow.

The method may include: learning from historical data and feedback received from the ecosystem to predict scope and objective failure; and providing recommendations with respect to additional workflow triggers and resource group reallocation requirements.

According to a second aspect of the invention, a system for streamlining multiple disparate workflows generated by equipment is provided. The system includes: a processor; and a memory including computer-executable instructions that, when executed by the processor, cause the processor to perform operations, the operations including: receiving workflow trigger sources from the equipment; generating two or more disparate workflow systems in response to the workflow trigger sources; transforming the two or more disparate workflow systems into a single unified workflow; and performing the unified workflow for the equipment.

Organizing the transforming the two or more disparate workflow systems into the single unified workflow further includes: removing any aspects of the two or more disparate workflow systems that are duplications

The operations may further include: translating each of the two or more disparate workflow systems into a common uniform process nomenclature.

The operations may further include: categorizing each of the two or more disparate workflow systems.

The transforming the two or more disparate workflow systems into the single unified workflow may further include: arranging the two or more disparate workflow systems into a sequence having a beginning and an end that bookends the single unified workflow and defines in what order the unified workflow will operate.

The operations may further include: determining an effectiveness of the unified workflow.

The operations may further include: reorganizing the unified workflow based on the effectiveness of the unified workflow.

The operations may further include: learning from historical data and feedback received from the ecosystem to predict scope and objective failure; and providing recommendations with respect to additional workflow triggers and resource group reallocation requirements.

According to a third aspect of the invention, a computer program product tangibly embodied on a non-transitory computer readable medium is provided. The computer program product including instructions that, when executed by a processor, cause the processor to perform operations including: receiving workflow trigger sources from an equipment; generating two or more disparate workflow systems in response to the workflow trigger sources; transforming the two or more disparate workflow systems into a single unified workflow; and performing the unified workflow for the equipment.

Organizing the transforming the two or more disparate workflow systems into the single unified workflow may further includes: removing any aspects of the two or more disparate workflow systems that are duplications

The operations may further include: translating each of the two or more disparate workflow systems into a common uniform process nomenclature.

The operations may further include: categorizing each of the two or more disparate workflow systems.

Technical effects of embodiments of the present invention include combining multiple disparate workflows for equipment into a streamlined single unified workflow.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

Certain embodiments of the invention will now be described, by way of example only, and with reference to the accompanying drawings in which like elements are numbered alike. The following descriptions should not be considered limiting. The accompanying drawings are as follows:
FIG. 1 is a perspective view of a structure in which a heating, ventilation and air-conditioning (HVAC) system is deployed;
FIG. 2 is a block diagram of different components of an exemplary system architecture, an exemplary profiling module and an exemplary normalization characteristics module;
FIG. 3 is a block diagram of different components of an exemplary classification module;
FIG. 4 is a block diagram of different components of an exemplary insights and service actionable generation module;
FIG. 5 is a block diagram of different components of an exemplary normalized, correlated and de-duplicated incident generation module;
FIG. 6 is a block diagram of different components of a workflow unification system of the server;
FIG. 7 is an example workflow for a refrigeration leak; and
FIG. 8 is a flowchart illustrating a method of streamlining multiple discrete workflows generated by equipment.

### DETAILED DESCRIPTION

A detailed description of one or more embodiments of the disclosed apparatus and method are presented herein by way of exemplification and not limitation with reference to the Figures.

As aforementioned, disparate systems are designed for different types of users, such as, for example, end users, remote technicians, field technicians, or any other end user with respective workflow systems. Different trigger sources initiate workflows in disparate systems (e.g., complaints, planned service requests, alarms, failures, predictions etc.). Workflow systems are designed to achieve objectives of improving comfort, compliance, health, and safety for end user, performance of the equipment while there are separate workflows for reducing energy usage and maintenance cost for the equipment. These objectives are sometimes contradictory to each other and have substantial overlap.

These workflows also run in disparate systems and are independent of each other and create duplicate work items, cross purpose work items, and lead substantial waste in resources both from labor, consumables and parts required for upkeep of the equipment. In some extreme cases this also results in reduction of equipment life due to improper maintenance, operation or failure of critical components of the equipment.

The embodiments disclosed herein seek to provide a comprehensive, interconnected master workflow which abstracts the objective of each workflow, connect and sequence them in right manner to reduce duplication, overlaps and cross-purpose resource utilization to achieve the objective the equipment was designed to provide for the user.

Described herein is a technology with a system and a method for generating generalized equipment behavior, predictive insights, service actionable and recommendations for a plurality of equipment located on a site. One or more sites may have a plurality of equipment present inside or outside the sites. Each of these plurality of equipment may also have the capability to transmit data stream to a server through a network. The server may generate characteristics or characterized data of the plurality of equipment from the data stream. Also, the server may also receive or determine attributes of the plurality of equipment.

Based on the characteristics or characterized data and the attributes of the plurality of equipment, the server may behaviorally classify equipment into normalizing classification and behavior classification. The server may further generate one or more profiles by processing the normalizing and behavior classifications. The one or more profiles may represent time-granular behavior patterns of the equipment. The server may also generate time-granular normalized characteristics for the equipment using the time-granular behavior patterns. Using the time granular equipment behavior and the time granular normalized characteristics, the server may generate service actionable recommendations for the plurality of equipment.

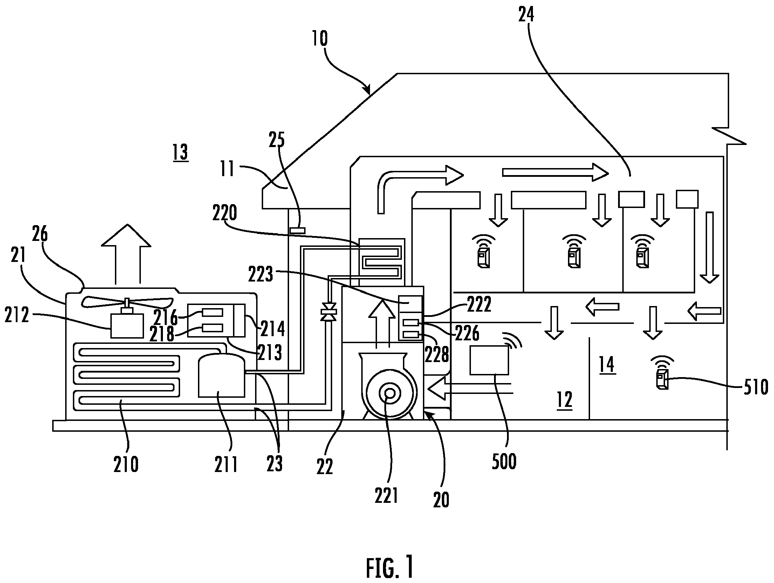

As used herein, the plurality of equipment may have capability to generate data stream as described below. Each of the plurality of equipment may be connected with the server through the network and transmit the data stream to the server. Such plurality of equipment may be refrigerators, heating, ventilation, and air conditioning (HVAC) systems, chillers, televisions, geysers, lights, laptops, computers, mobile devices, wearable devices, fans, cameras or any such equipment that is well known in the art. An HVAC system is utilized in FIG. 1 as an example of a particular type of equipment but it is understood that equipment may include refrigerators, chillers, televisions, geysers, lights, laptops, computers, mobile devices, wearable devices, fans, cameras or any such equipment that is well known in the art.

As used herein, the server has processing capabilities as disclosed further in the specification. The server may be a cloud storage, a remote database, or any such storage known in the art.

As used herein, the network may refer to a wired network, a mesh network, a cellular network such as Global System for Mobile (GSM) network, a Long-Term Evolution (LTE) network, a code-division multiple access (CDMA) network, a narrow-band internet of thing (NB-IoT) technique or category M1 technique or any such network/technique that is known in the art.

Throughout the specification, reference numeral 102 depicts all sites. Each of the reference numerals 102A-102B may be considered as a separate site. Also, throughout the specification, reference numeral 104 depicts all equipment. Each of the reference numerals 104A-104H may be considered as a separate equipment.

The embodiments disclosed herein seeks to combine multiple disparate workflows from a piece of equipment into a single and efficient unified workflow (i.e., unified process).

FIG. 1 is schematic view of a structure 10 and an HVAC system 20 for the structure 10. The structure 10 may be configured as a residence, an industrial building, or a commercial building. For purposes of clarity and brevity, however, the following description will relate to the case where the structure 10 is configured as a single-family residence. The structure 10 thus includes a structural body 11 which defines an interior 12 and separates the interior 12 from an exterior 13. The interior 12 may be further divided into multiple rooms 14 and areas for various purposes.

The structure 10 includes an HVAC system 20 disposed and configured to control environmental conditions within the interior 12. The HVAC system 20 includes one or more of an outdoor unit 21 and an indoor unit 22. The outdoor unit 21 is disposed at the exterior 13 of the structural body 11 and the indoor unit 22 is disposed in the interior 12.

As shown in FIG. 1, the outdoor unit 21 includes a condenser coil 210, a compressor 211, a fan 212 and, in some cases, an outdoor controller 213, and a first wireless transceiver 214. The first wireless transceiver 214 may be in wireless communication with a thermostat 500. Alternatively, the outdoor unit 21 may be in wired communication with the thermostat 500. The outdoor controller 213 may be an electronic controller including a processor 216 and an associated memory 218 comprising computer-executable instructions (i.e., computer program product) that, when executed by the processor 216, cause the processor 216 to perform various operations. The processor 216 may be, but is not limited to, a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 218 may be but is not limited to a random access memory (RAM), read only memory (ROM), or other electronic, optical, magnetic or any other computer readable medium.

As shown in FIG. 1, the indoor unit 22 includes an indoor coil 220, a furnace 221 and, in some cases, an indoor controller 222 and a second wireless transceiver 223. The second wireless transceiver 223 may be in wireless communication with a thermostat 500. Alternatively, the indoor unit 22 may be in wired communication with the thermostat 500. The second wireless transceiver 223 may also be in wireless communication with the first wireless transceiver 214. The indoor controller 222 may be an electronic controller including a processor 226 and an associated memory 228 comprising computer-executable instructions (i.e., computer program product) that, when executed by the processor 226, cause the processor 226 to perform various operations. The processor 226 may be, but is not limited to, a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 228 may be but is not limited to a random access memory (RAM), read only memory (ROM), or other electronic, optical, magnetic or any other computer readable medium.

Refrigeration lines 23 are provided to connect the outdoor unit 21 with the indoor unit 22 and ducts 24 are provided throughout the interior 12 such that heated or cooled air can be transported from the indoor unit 22 to the various areas in the interior 12. It is understood that while FIG. 1 illustrated a particular arrangement of ducts 24, the embodiments disclosed herein may apply to any arrangement of ducts 24.

In some cases, the components of the outdoor unit 21 and the indoor unit 22 may be included in a single unit that can be disposed at the exterior 13 of the structural body 11 or in the interior 12. For example, the components of the indoor unit 22 may be included in the outdoor unit 21 and disposed at the exterior 13. Conversely, the components of the outdoor unit 21 may be included in the indoor unit 22 and disposed in the interior 12. Still other embodiments exist in which the components of the outdoor unit 21 and indoor unit 22 are included in a single device which is partially disposed at the exterior 13 and partially disposed in the interior 12 (e.g., a window air-conditioning unit or wall air conditioning unit).

The HVAC system 20 may further include one or more sensors 510, such as temperature sensors, that are distributed throughout the interior 12 and possibly at the exterior 13. The sensors 510 are in wireless or wired communication with the thermostat 500, a further discussed herein. The thermostat 500 is generally accessible to an individual and is configured to control various operations of the outdoor unit 21 and indoor unit 22 to maintain desired environmental conditions in the interior 12 in accordance with at least readings of the one or more sensors 510 and with commands input by a user.

The thermostat 500 may have the capability to establish and maintain wireless connectivity over one or more networks (e.g., Wi-Fi, Bluetooth, Z-Wave, Zigbee, etc.). The thermostat 500 can therefore be connected to a homeowner's Wi-Fi network and the Internet. This allows the thermostat 500 to have additional features and capabilities including, but not limited to, being remotely controllable by a user using a portable computing device (e.g., a mobile phone, a tablet, a laptop, etc.).

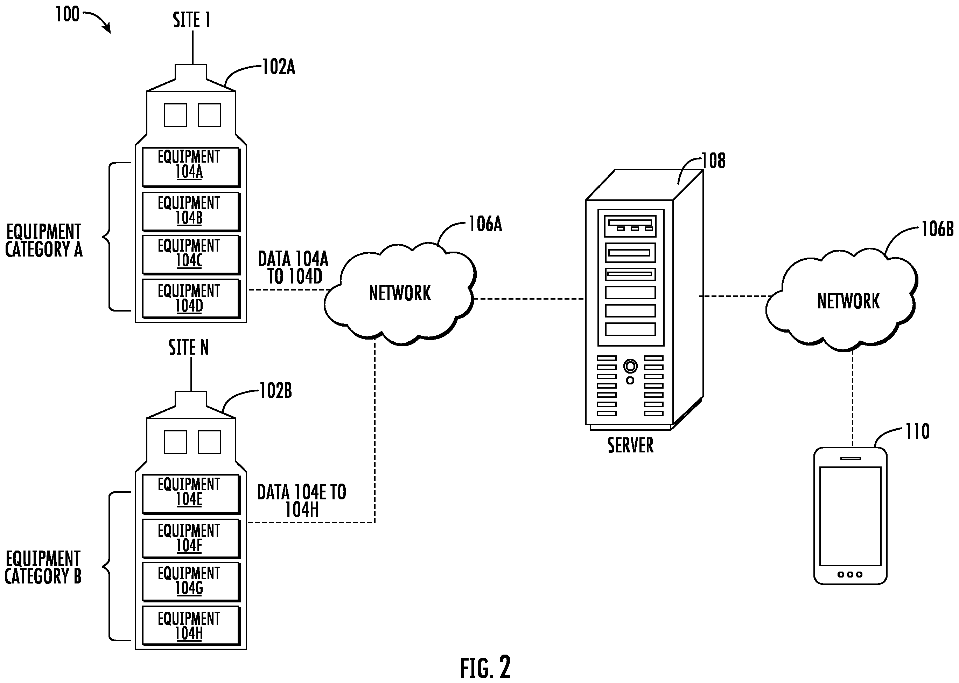

Referring now to FIG. 2, with continued reference to FIG. 1, a system architecture 100 is illustrated, according to an embodiment of the present invention. As can be seen in FIG. 2, a building/site 102A may have a plurality of equipment, namely 104A, 104B, 104C and 104D. In one example, one of the equipment 104A, 104B, 104C, 104D at the building/site 102A may be the HVAC system 20 of FIG. 1 and the building/site 102A may be structure 10 of FIG. 1. Similarly, another site 102B may also have four equipment, namely 104E, 104F, 104G and 104H. These equipment 104 may be located inside or outside the site 102. Further, each of these plurality of equipment 104 may determine data stream. The equipment 104 may generate and transmit the data stream to a server 108 through a network 106A. When the server 108 receives the data stream from each of the plurality of equipment 104, the server 108 may generate characteristics or characterized data for each of the plurality of equipment 104. The server 108 may generate the characteristics or characterized data using methodology as described in USPTO Application No. 17/122,350Titled "A System And A Method For Uniformly Characterizing Equipment Category" which is incorporated herein by reference. The characteristics or characterized data for each of the plurality of equipment 104 and attributes (as described in Indian Application No. 202011019422 Titled "A System And A Method For Uniformly Characterizing Equipment Category") may be provided as inputs in a system 300 which is explained below. In an exemplary embodiment, the characteristics or characterized data may be uniform representations of the equipment 104 based on data points received in data stream from the equipment 104 of a particular equipment category. Further, some examples of the attributes are type of equipment, technology of equipment, make and model of an equipment. The server 108 may transmit outputs of the system 300 to a device 110 through a network 106B, wherein the device 110 may exhibit such outputs.

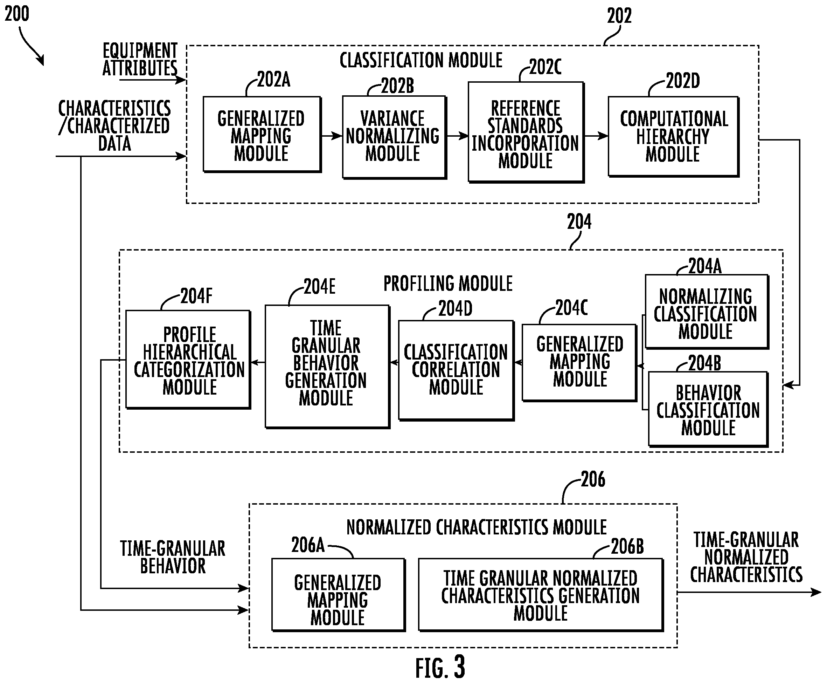

Referring now to FIG. 3, with continued reference to FIGS. 1-2, a block diagram of different components of an exemplary system 200 of the server 108 is illustrated. The server 108 may be an electronic controller including a processor and an associated memory comprising computer-executable instructions (i.e., computer program product) that, when executed by the processor, cause the processor to perform various operations. The processor may be, but is not limited to, a single-processor or multiprocessor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

The system 200 may comprise of, but is not limited to, a classification module 202, a profiling module 204, and a normalized characteristics module 206. The classification module 202 may further comprise of, but is not limited to, a generalized mapping module 202A, a variance normalizing module 202B, a reference standards incorporation module 202C, and a computational hierarchy module 202D. The profiling module 204 may further comprise of, but is not limited to, a normalizing classification module 204A, a behavior classification module 204B, a generalized mapping module 204C, a classification correlation module 204D, a time-granular behavior generation module 204E, and a profile hierarchical categorization module 204F. Also, the normalized characteristics module 206 may further comprise of, but is not limited to, a generalized mapping module 206A and a time-granular normalized characteristics generation module 206B.

The classification module 202 may receive the characteristics or characterized data for each of the plurality of equipment 104 and the attributes as inputs. The generalized mapping module 202A may be configured to map the characteristics or characterized data and the attributes to various aggregation methods and may further be configured to map the output of aggregation methods to the data processing algorithms. In particular, the generalized mapping module 202A may map the characteristic of an equipment category to a right set of data processing algorithms to generate classifications. The set of data processing algorithms for classification are different for different equipment category. Further, the generalized mapping module 202A may map the characterized data of the equipment 104 (characteristics are generic across equipment category) to data processing algorithms for classifications. The data processing algorithms may be available as part of a library. This is done to behaviorally classify the equipment(s) 104 associated with the system 200 into normalizing classification and behavior classification based on the characterized data and the attributes for the plurality of equipment 104. Further, the behaviors patterns of the equipment 104 may be represented using one or more user-interpretable generalized performance categories depicting how the equipment 104 operates internally and changes in a lifecycle of the equipment 104 due to changing external conditions, end usage and intervention events for the equipment 104. Also, the one or more user-interpretable generalized performance categories comprise availability, compliance, health, optimized operations and efficiency, update and upgrade. These one or more user-interpretable generalized performance categories are explained herein below:
(1) Availability: This category may relate to behaviors of the equipment 104 in a near failure condition (of both the equipment or end objective failures).
(2) Compliance: This compliance category may relate to behaviors of the equipment 104 for achieving their end objective.
(3) Health: This health category may relate to behaviors of the equipment 104 related to physical interactions of its components and effect as well as impact of other equipment 104 and external factors
(4) Optimized Operations (Compliance impacting factors): This category may relate to behaviors of the equipment 104 around end usage operations which may be related to achieving the end usage objective of the equipment 104.
(5) Efficiency: This efficiency category may relate to behaviors of the equipment 104 around end usage operations which may be related to resource usage by equipment 104.
(6) Update and Upgrade: This category may relate to behaviors of the equipment 104 during and after a major change like a software updates or component upgrades.

The variance normalizing module 202B may be configured to normalize the characteristics or characterized data and the attributes of the plurality of equipment 104 as the characteristics of the equipment 104 are not uniformly available from each equipment 104 and differ based on data availability. Hence, similar characteristics can be utilized by different classification methodology to generate normalized/uniform classification. The reference standard incorporation module 202C may be configured to incorporate standard references in the normalized the characteristics or characterized data and the attributes. Standard references may be available as industry reference documents/data (e.g. product documentation or user manuals etc.) at various sources such as manufacturer's website. This data is imported or referred into the system 200 for further use.

The computation hierarchy module 202D may be configured to hierarchically process the characteristics/ characterized data and the attributes for providing flexibility to choose the characterized data in a preferred order to behaviorally classify the equipment 104 into the normalizing classification and the behavior classification for the equipment 104. This is done so as to bridge the gap between availability of different types of characterized data. Further, the variances in the characteristics may be normalized. For an example, if the characteristics are different or not completely available (Full characteristics or partial characteristics). Such variances in characteristics may be normalized by choosing through a hierarchy of processing by the computation hierarchy module 202D i.e. in case of un-availability of certain characteristics data, additional characteristics which might be low quality in nature are utilized in different data processing algorithms to provide for additional classification in the hierarchy which may be utilized within the constraints of low quality. There may be some set of reference standards which are available and incorporated in the generated classifications. Depending on the quality and availability of the characteristics, the hierarchy is decided by the computation hierarchy module 202D.

The behaviorally classified equipment into the normalizing classification and the behavior classification (i.e. the output of the classification module 202) may be provided as an input to the profiling module 204. The normalizing classification module 204A and the behavior classification module 204B may be configured to process the normalized classification and the behavior classification. The profiling module 204 may use the normalized and behavior classifications to isolate different behaviors of the plurality of equipment 104. The normalized classifications may be subjective in nature. For an example, high values, low values, peak values, part values, etc. The normalized classification may indicate condition of an equipment 104. For example, whether the equipment is at peak load. The behavior classification may indicate behavior of the equipment 104 and may be represented as good, average, below average, null (in case of missing behavior). Thus, the behavior classification may indicate performance behavior of equipment 104 before it is correlated with other conditions.

Behavior classification and normalized classification may represent transitive and intransitive nature of the classification. For example, the behavior classification such as good, average, below average need to be correlated with other normalized and behavior classifications. A below average behavior is actually below average when the normalized behavior e.g. the equipment is at peak or part load. Thereby, a certain behavior of the equipment 104 is intransitive until it is correlated with all possible behaviors mapped in the system 200 to make it transitive and deterministic. As a result, an impact of dependency/relation of an equipment 104 on other equipment may be expressed as a deterministic classification to establish intransitive-transitive and transitive-transitive correlation amongst the equipment 104 and the other equipment. Such establishment of relationship between such equipment enables conversion of characteristics into classification and correlating the generated classifications as part of profile generation to signify transitive behavior of the equipment 104.

The generalized mapping module 204C may be configured to map the normalizing classification and the behavior classification to aggregation methods and further maps the output of aggregation methods to data processing algorithms to generate one or more profiles corresponding to the equipment 104. In particular, the generalized mapping module 204C may map the normalizing classification and the behavior classification to a right set of data processing algorithms to generate classifications. The set of data processing algorithms for classification are different for different equipment category. Further, the generalized mapping module 204C may map the normalizing classification and the behavior classification of the equipment 104 to data processing algorithms for classifications. The data processing algorithms may be available as part of a library. The classification correlation module 204D may be configured to correlate performance behavior to the normalized behaviors that establishes valid normalizing conditions to uniquely isolate different types of behavior. The classification correlation module 204D may also use combination of normalizers to multiplex/normalize the behaviors using English/local word filters. Results of normalizers are English/local words such as behavior are always good, average, below average.

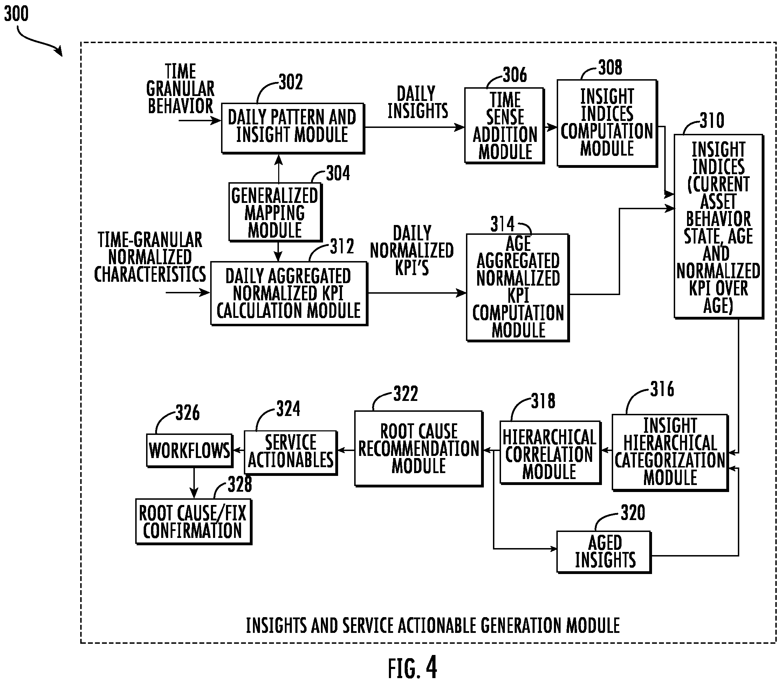

The time-granular behavior generation module 204E may be configured to generate time-granular behavior patterns for the plurality of equipment 104 by combining the generated profiles at time granularity by performance categories. In an exemplary embodiment, the one or more profiles generated may represent time-granular behavior patterns of the equipment 104 which may be built using the user-interpretable generalized performance categories and user-editable hierarchies with one or more interrelated editable dimensions for different types of end usage of the equipment 104 and interpretation. Such profiles for the plurality of equipment 104 may comprise proactive indicator profiles. The proactive indicators for a particular category may be combined to form a master indicator profile based on behavior types (i.e. availability, compliance, health, efficiency etc. as explained below) of the equipment 104. The profile hierarchical categorization module 204F may be configured to categorize the generated profiles in a hierarchy for generating the time-granular behavior patterns of the equipment 104. Such a hierarchy also signifies the urgency of an anomalous behavior or unhealthy behavior of the equipment 104. Further, if such unhealthy behavior of the equipment 104 continues then this would result in further deterioration of health of the equipment 104 which would lead to behavior that signifies the inability of the equipment 104 to meet its objective and then finally complete failure of the equipment 104. Further, the profile hierarchical categorization module 204F may be configured to use categorized and editable hierarchies with multiple interrelated dimensions for different types of end usages of the equipment 104 and interpretation. Different editable hierarchy dimensions for building up the behavior may comprise, but is not limited to, period dimension, quantified usage dimension, performance behavior categorization and relationship dimension which are explained below.
1) Period dimension may comprise: a) behavior patterns of the equipment 104 at smallest period of time applicable (15 mins or hour); b) aggregated patterns of the equipment 104 based on a period signifying start and end of end usage (Day); and/or c) aggregated behavior patterns of the equipment 104 based on usage over multiple days for particular behavior pattern.
2) Usage dimension may comprise: The period dimensions from editable hierarchy may be used simultaneously along with the usage dimensions to identify operation behavior of the equipment in context of usage pattern. The usage dimension for editable hierarchy may comprise i.) Normalizing classification representing quantified end usage; and/or ii.) Behavior classifications representing non categorized performance behaviors.
3) Performance behavior categorization and relationship dimension may comprise: Non-categorized performance behaviors may be normalized using normalized usage classifications at a lowest time dimension period and to correlate the non-categorized performance behaviors with each other under each performance category to provide a performance category master and related component behaviors. Master and related component behaviors may be aggregated over time dimension hierarchy to build up behavior patterns to retain the hierarchical relationship of causality between the performance category master and the component behaviors to provide a set of master behaviors indices representing performance category and related component behavior indices. Further, the master and the component behaviors may be represented as indices which are combination of a name of a behavior, a state of the behavior, an age of the behavior and an aggregated key performance parameter over the age of the behavior. The combination of master and their components may provide service actionable having insights and recommendation for behavior correction of the equipment 104 which is explained in FIG. 4 further herein. This combination of the master and component indices may help in maintaining performance category attributes and the causality between the performance categories to enable identification of the service actionable and accordingly increase severity of insights as the behavior patterns develop with time taken to implement the service actionable.

The generated time-granular behavior patterns for the plurality of equipment 104 may be provided as an input to the normalized characteristics module 206. The generalized mapping module 206A may be configured to map the generated time-granular behavior to aggregation methods and further maps the output of aggregation methods to data processing algorithms to generate characteristics of the equipment 104. In particular, the generalized mapping module 206A may map the generated time-granular behavior to a right set of data processing algorithms to generate classifications. The set of data processing algorithms for time-granular behavior are different for different equipment category. Further, the generalized mapping module 206A may map the generated time-granular behavior of the equipment 104 to data processing algorithms for classifications. The data processing algorithms may be available as part of a library.

The time-granular normalized characteristics generation module 206B may be configured to generate time-granular normalized characteristics for the plurality of equipment 104 using the generated characteristics of the equipment 104. This embodiment of the present invention provides the advantage of uniform, isolated behavior classification model based on equipment performance categories independent of variances of equipment characteristics for different types of equipment usage and also provides the advantage of a single generalized definition for time granular behaviors which is independent of multitude of equipment under process. This embodiment of the present invention also provides an advantage of classifying the time granular behavior for the equipment category such that the classifications are the reusable in other equipment behaviors and autonomously editable for functionality in live-stream thus reducing redundant processing and reprocessing for changes or variations in new any equipment.

Referring now to FIG. 4, with continued reference to FIGS. 1-3, a block diagram of different components of exemplary insights and service actionable generation module 300 is illustrated. The exemplary insights and service actionable generation module 300 may be configured to normalize variances of generated equipment characteristics and behavior over a time duration using the time granular equipment behavior (output of the system 200) and the time granular normalized characteristics (output of the system 200) to generate possible service actionable (SACT) recommendations that are integrated into workflows to drive action and receive prediction confirmation. For doing this, the insights and service actionable generation module 300 may comprise of, but is not limited to, a daily pattern and insight module 302, a generalized mapping module 304, a time sense addition module 306, an insight indices computation module 308, an insight indices 310, a daily aggregated normalized key performance indicator (KPI) calculation module 312, an age aggregated normalized KPI computation module 314, an insight hierarchical categorization module 316, a hierarchical correlation module 318, an aged insight 320, a root cause recommendation module 322, a service actionable 324, workflows 326 and a root cause/fix confirmation 328.

The daily pattern and insight module 302 may be configured to use the time-granular behavior for the plurality of equipment 104 to create time-granular insight indicators. The daily pattern and insight module 302 may also be configured to correlate the time-granular insight indicators for identifying patterns over time and to generate daily insight profiles by transforming the time-granular insight indicators and using the identified patterns. The generalized mapping module 304 may be configured to map the time-granular normalized characterized data and the time-granular behavior patterns to aggregation methods and further map the output of aggregation methods to data processing algorithms. The time sense addition module 306 may be configured to add time sense to the generated insights indicators and the daily insight profiles is maintained to indicate the persistence of the identified pattern.

The daily aggregated normalized KPI calculation module 312 may be configured to convert the time-granular normalized characteristics data to daily-aggregated normalized characteristics/characteristics data for the plurality of equipment 104 using the time-granular insight indicators. The age aggregated normalized KPI computation module 314 may be configured to covert the daily-aggregated normalized characteristics data to age aggregated characteristics data for the plurality of equipment 104. The daily-aggregated normalized characteristics data are aggregated over age of state.

The insight indices computation module 308 may be configured to receive the daily insight profiles from the daily pattern and insight module 302. Then, the insight indices computation module 308 may be configured to generate insight indices based on pattern of their behavior using the daily insight profiles and the daily-aggregated normalized characteristics data. The insight indices 310 may be configured to receive the generated insight indices from the insight indices computation module 308 and the age aggregated characteristics data for the plurality of equipment 104 from the age aggregated normalized KPI computation module 314 to generate a set of indices to represent current performance state of the equipment's behavior, age of state and normalized KPI of performance state.

The insight hierarchical categorization module 316 and/or the hierarchical correlation module 318 may be configured to categorize the generated insight indices as master indices (such as availability, compliance, health and efficiency) with a set of component proactive indices associated with each master indices. The combination of the proactive indices with a particular state may provide possible service actionable (SACT) integrated into workflows to drive action and receive prediction confirmation. The aged insights 320 may be configured to determine insights which may be aged over a period of time. The root cause recommendation module 322 may be configured to identify the cause/reason for a problem occurred or is about to occur in the equipment 104 or badly impacting the equipment 104 in any manner.

The service actionable 324 may be configured to generate service actionable recommendation(s) based on identified pattern of observed behavior/characteristics data of the equipment 104 over an extended time period (time sense). The service actionables 324 may use pattern recognition as part of a cognitive process that matches observed characteristics as a stimulus with information collected over a time period. The identified pattern or repeat in occurrence of the characteristics of an equipment 104 over a period of time span may lead to generation of service actionable. For an example, impact of refrigerant leak on cooling in an HVAC system. Persistence and increase in severity of the pattern of variables identifying refrigerant leak over a time span may lead to other detrimental conditions like impact on the bearing lubricated using the refrigerant. Such pattern over a period of time may require service actionable to be generated to notify a person for taking a corrective action at the earliest. However, if any corrective action is not taken for an identified pattern, the service actionable 324 may identify the pattern leading to the next stage of failure and predicting additional service actionable to prevent further stages of failure. Thus, a predictive service actionable is generated by the service actionables 324 based on the detected patterns and is able to adjust to identify additional patterns if the condition is allowed to fester. The system 300 hence identifies and indicates the urgency of the actionable at any point in time. The generated service actions may be serviced automatically or by a technician and reported back to the system 300 using the root cause/fix confirmation 328 which is explained below.

In an exemplary embodiment of the present invention, the workflows 326 may be configured to receive the generated service actionables/actions as an input from the service actionables 324 and may be configured to perform tracking actions and effect of the service actionable/actions on the equipment 104. In case, if any actions implemented on an equipment 104 are ineffective or partially effective, then in such case, the system 300 may track the new patterns and provides for the identification for the balance actions required to make the action completely effective. The output of the workflows 326 may be reusable in other modules of the system 200 or the system 300 and may be combined together to provide for a list of service actions required for any equipment 104 at any point of time to prevent any sort of future failures. The output of the any module may be integrated into the workflows 326 addressing the upkeep of the equipment 104 and may enrich the workflow 326 with predictions and insights. With the integration into the workflows 326, the workflows 326 may have an ability to get connected to an ecosystem of comfort, maintenance of the equipment 104 and efficiency processes and getting confirmation, feedback from the ecosystem for technicians working on both field and remote for the implementation of the service actions on the equipment 104 i.e. work completed and how the work was completed which provides confirmation and acts as labelling to be used for training and further learning by the system 300 to improve the quality and coverage of the predictions.

The root cause/fix confirmation 328 may be configured to provide a confirmation to the technicians (working on both field and remote) for the implementation of the service actions on the equipment 104. This may also include a confirmation for complete, partial or failure of implementation of the service actions on the equipment 104. The root cause recommendation module 322 may be configured to provide suggestion for further actions to be implemented on the equipment 104 based on the complete, partial or failure of implementation of the service actions on the equipment 104. In an exemplary embodiment, the root cause/fix confirmation 328 may provide a notification to a technician or a user of the system 300 regarding a status of the service actionable being implemented on the equipment 104.

Overall, the insights and service actionable generation module 300 may be configured to suggest the generated service actionable as a recommendation to the user. Such recommendation may comprise severity of a deteriorating behavior at that instance of time, a stage of deterioration with respect to overall predefined stages in which failure happens and an effect of combined anomalous behavior pattern on the equipment 104. The insights and service actionable generation module 300 may also be configured to compute and update the user about number of days remaining to reach a final stage of failure. Therefore, the classification module 202, the profiling module 204, the normalized characteristics module 206 and the insights and service actionable generation module 300 may be configured to generate generalized equipment behavior, predictive insights, service actionable and recommendations for early correction of anomalous behavior for different equipment categories from multiple time series equipment data streams.

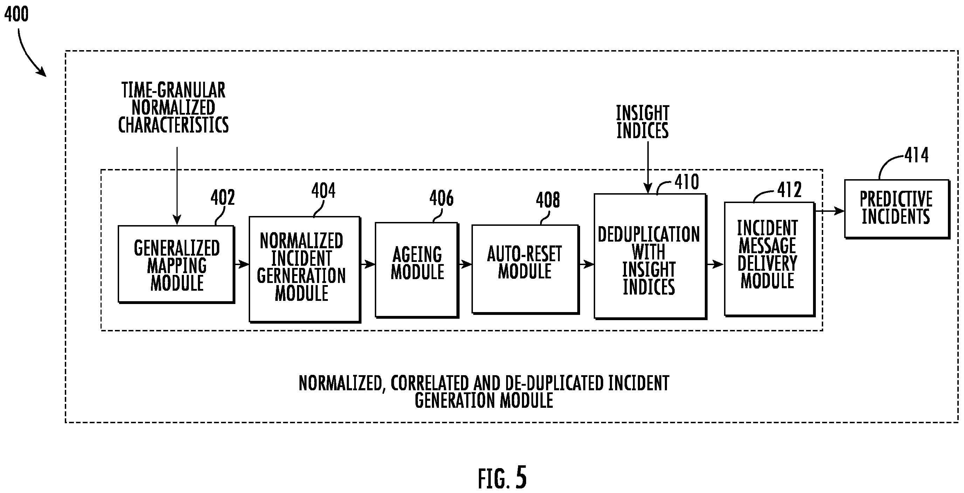

Referring now to FIG. 5, with continued reference to FIGS. 1-4, a block diagram of different components of exemplary normalized, correlated and de-duplicated incident generation module (or a predictive incident module) is illustrated. The exemplary normalized, correlated and de-duplicated incident generation module 400 may comprise of, but is not limited to, a generalized mapping module 402, a normalized incident generation module 404, an ageing module 406, an auto-reset module 408, a de-duplication with insight indices 410, and an incident message delivery module 412. In an exemplary embodiment, the normalized, correlated and de-duplicated incident generation module 400 may be part of the insights and service actionable generation module 300.

The generalized mapping module 402 may be configured to receive the time-granular normalized characteristics as an input from the system 300 and map the time-granular normalized characteristics with the gathered incident data. The normalized incident generation module 404 may be configured to generate incidents based on current behavior of the equipment 104 and state normalized over the age (age aggregated). The normalized incident generation module 404 may also be configured to combine the current behavior of the equipment 104 with the expected KPI defined for the equipment 104. The ageing module 406 may be configured to calculate the age or hours of anomalous behavior exhibited by the equipment 104. The auto-reset module 408 may be configured to reset the normalized incident generation module 404 after the system 400 converts the anomalous behavior of the equipment 104 into predictions for failure with service action recommendations. The de-duplication with insight indices 410 may be configured to receive the insight indices as an input and may be configured to remove any/all duplicate entry to avoid false alarms. Further, the prolonged behavior of the characteristics data of the equipment 104 over a period of time may lead to generation of duplicated incidents. The incident message delivery module 412 may be configured to deliver the identified incident notifications as one or more predictive incidents to a user of the system 400 on the anomalous behavior noted and if the user wants to start planning for any corrective actions. The one or more predictive incidents may be based on the time-granular normalized characteristics and the insights to provide earlier view of anomalous behavior of the equipment 104 before converting an incident into a prediction for failure. Further, the generated predictive incidents may be placed into an immediate monitoring list and to graduate the predictive incidents to be service actionable as the condition of the equipment 104 persists. This embodiment of the present invention provides the advantage of providing a clear actionable measure at every associated time interval for summarization in different categories of equipment behavior and easy to track the undesired behavior groups and form patterns over time which can identify the reason and action or fix for the undesired behavior.

In an exemplary embodiment, the system 200, the system 300 and the system 400 are part of the server 108 and are inter-connected with each other. In another exemplary embodiment, the system 200, the system 300 and the system 400 can be a single system.

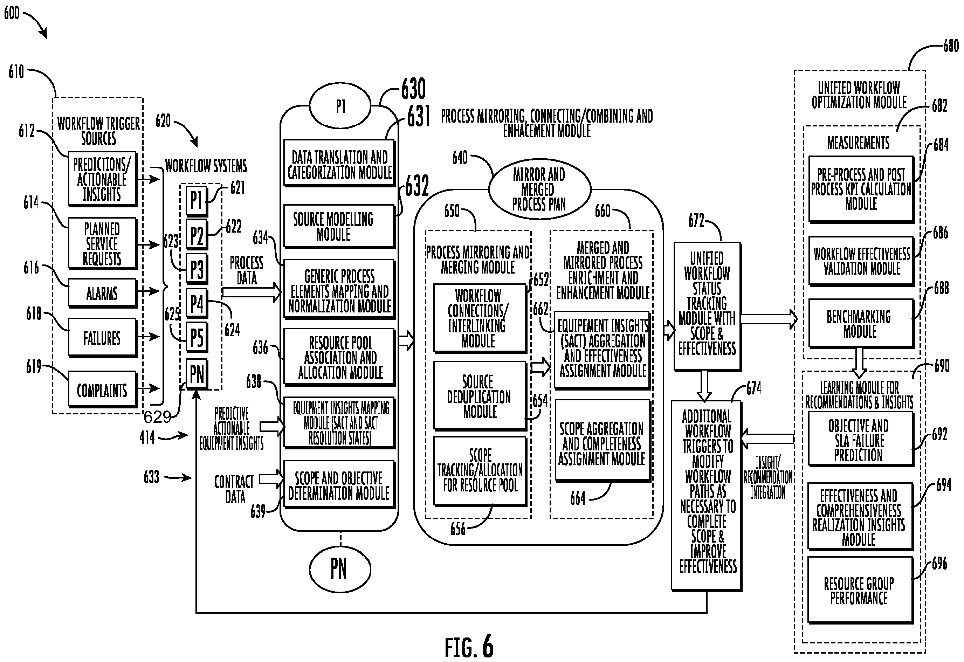

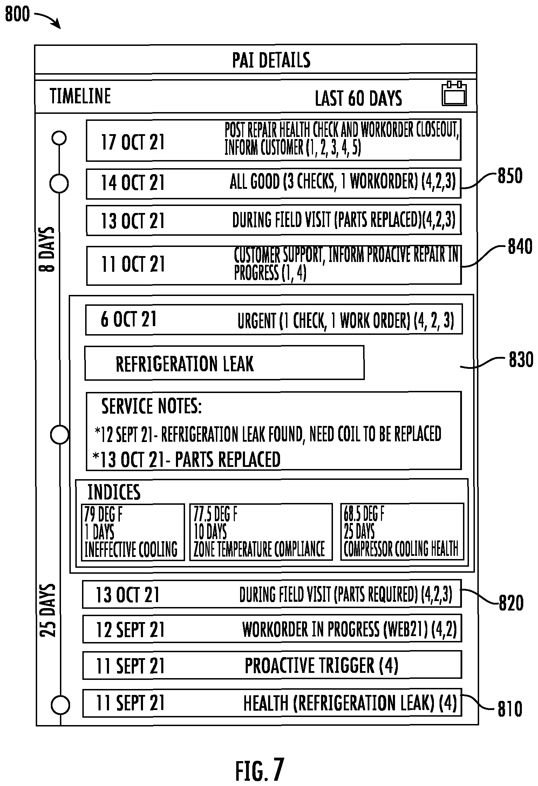

Referring now to FIGS. 6 and 7, with continued reference to FIGS. 1-5, a block diagram of different components of a workflow unification system 600 of the server 108 is illustrated. The workflow unification system 600 is configured to predict what problems with the equipment 104 may occur in the future and what actions need to be taken in the future to correct the problems.

The workflow unification system 600 may include one or more disparate workflow systems 620. The one or more disparate workflow system 620 may include anywhere from a first disparate workflow system 621 to an N^{th} disparate workflow system 629. The disparate workflow system 622 may conventionally run independently of each other with no coordination between the disparate workflow systems 620. Thus, there may typically be a great deal of repetition and overlap amongst the disparate workflow systems 620.

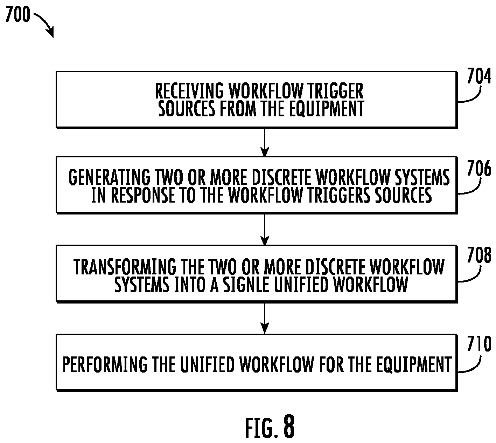

The embodiments disclosed herein seek to provide coordination of the separate disparate workflow systems 620. The workflow unification system 600 is configured to coordinate the operation of each separate disparate workflow system 620. The workflow unification system 600 may be configured to run the disparate workflow systems 620 in a sequence to get the best out of the overall workflow unification system 600. Further the workflow unification system 600 is configured to evaluate each disparate workflow system 620 and eliminate workflow systems 620 that are duplicates of other disparate workflow 620 or accomplish the same objective. Depending on the inputs received from the workflow trigger sources 610, the workflow unification system 600 may trigger additional workflow systems 620 in a specific order or the workflow unification system 600 may reduce the number of disparate workflow systems 620 performed. An example workflow 800 for a refrigeration leak is illustrated in FIG. 7. For example, a proactive service actionable recommendation for "Refrigeration leak" is analyzed by a remote technician as depicted in FIG. 8. The unified workflow process in this example scenario merge the following disparate workflow systems 620:
The first disparate workflow system 621 may be "A Customer Call as a result of ineffective cooling from Roof Top Unit (RTU), normally tracked in Customer call management system".

The second disparate workflow system 622 may be "A work order and Inspection process of RTU during field visit as a result of customer call by a technician normally tracked in a work order system".

The third disparate workflow system 623 may be "Parts ordering and replacement for fixing the RTU normally a combination of workorder and parts inventory management system".

The fourth disparate workflow system 624 may be "Proactive remote health check based on predictive analytical systems and proactive repairs".

The fifth disparate workflow system 625 may be "Validation and certification of repair or warranty process trigger."

The Unified workflow merges above five disparate workflow system 620 as they trigger in following manner:
A first workflow trigger source 610 may be received from a predictive insights module that determines health condition with root cause refrigeration leak at block 810. This results in an identification of scope of fixing the refrigeration leak with objective of preventing issue raised by customer that is being serviced by the equipment.

Additional equipment servicing the same customers are similarly evaluated and consolidated for a proactive trigger to raise a workorder. As a result of a workorder, technician visits to fix the assigned scope with prior knowledge of repair scope avoiding duplication of time spent to determine repair needs.

During the visit at block 820, parts information is evaluated, and that information is shared across the system. As the parts are awaited, equipment moves to more critical condition. At block 830, if the parts arrive (In this example a coil replacement) and the technician fixes before issue is raised by customer then the objective of preventing issue raised by customer is fulfilled.

At block 840, in case the customer feels uncomfortable and raises issue the information can be shared with customer that repair is in progress and parts are awaited to avoid duplication of doing diagnostic and informing customer the source and estimated time of resolution.

After the field visit and parts getting replaced, the predictive insights system declares all good condition and triggers a post-process validation and evaluation phase at block 850. In this phase, the system provides good health information of the equipment, time, technician efforts and parts required for closing out the workorders and informs customer that the system is back to normal. This also avoids scenarios where customer repeat their issue immediately or within a short period of time which can happen without comprehensive and effective repair.

The system also monitors additional requirements which might arise during in-progress period (e.g., further damage to equipment like motor burn-out) as provided by the insights module and may trigger additional scope and workflow to achieve objective and agreed service level with the end user/customer.

The disparate workflow system 620 may require one or more workflow trigger sources 610 to initiate each disparate workflow 622. The one or more workflow trigger sources 610 may include, but are not limited to, predictions or actionable insights 612, planned service requests 614, alarms 616, failures 618, and complaints 619.

Predictions or actionable insights 612 may be predictions on how the equipment 104 should be operating. The predictions or actional insights 612 may be a detection of a refrigerant leak at an early stage. Planned service requests 614 may be scheduled services of the equipment 104 (e.g., planed preventative maintenance) that pertain to a regularly scheduled service at a predefined interval or an irregularly schedules service that was made at the request of a customer. Alarms 616 may be indicator from the equipment 104 that the equipment 104 is operating outside of a pre-defined operational boundaries. For example, the equipment 104 may be operating at a higher temperature or pressure than normal. Failures 618 may be any reported malfunctions of the equipment 104. The failures 618 may be reported automatically by the equipment 104 or manually entered by a customer. Complaints 619 may be any issues reported by a customer.

The workflow unification system 600 also includes a synchronization and translation module 630. The synchronization and translation module 630 is configured to translate all disparate processes into uniform process stages and synchronizes it in terms of time and different progress statuses.

The synchronization and translation module 630 includes a data translation and categorization module 631, a source modeling module 632, a generic elements mapping and normalization module 634, a resource pool association and allocation module 636, an equipment insights mapping module 638, and a scope and objective tracking module 639.

The data translation and categorization module 631 is configured to translate all of the disparate workflows 620 into a uniform process nomenclature, while also categorizing each disparate workflow 620. The uniform process nomenclature may apply uniform status indicators to each of the disparate workflows 62. Status indicators may include status such as, for example, open, closed, work-in-progress, or any other status indicator known to one of skill in the art. Since each disparate workflow 620 is different, they may have different status indicators (e.g., open, closed, work-in-progress) to describe a similar status, and the data translation and categorization module 631 is configured to translate each status into a uniform status indicator or nomenclature.

Each disparate workflow 620 may be categorized based on (1) whether the disparate workflow 620 is triggered proactively by a predictive system or triggered reactively due to a failure or issue reported by customer; (2) Whether a disparate workflow 620 that is a repair/improvement workflow can be executed remotely or automatically or needs a field dispatch; (3) Whether a disparate workflow 620 is managing resources like labor allocation or parts allocation.

The source modeling module 632 is configured to model the workflow trigger sources 610. What, when, and how does the workflow trigger sources 610 occur are sent to the disparate workflow systems 620. Also, the source modeling module 632 tells how each disparate workflow system 620 can start and how each disparate workflow system 620 can end.

The generic elements mapping and normalization module 634 is configured to map each of the disparate workflow systems 620 and sees what is common across each disparate workflow systems 620. The generic elements mapping and normalization module 634 is configured to translate all disparate workflow systems 620 into uniform process stages and synchronizes it in terms of time and different progress statuses

The resource pool association and allocation module 636 is configured to determine what resources are available and appropriately allocate available resources to each disparate workflow 620. For each disparate workflow systems 620, there may be a resource requirement, including, but not limited to, human efforts, time, consumables, cars, or equipment 104.

The equipment insights mapping module 638 may be able to establish a life cycle for each disparate workflow systems 620. The equipment insights mapping module 638 is configured to map equipment health condition from predictive analytics system to each stage of the workflows. For example: if a customer issue reporting process is triggered, the service actionable recommendation for equipment serving to that customer would also show that there is a problem as a result of which customer is reporting the issue. While customer reports issue generically (e.g., Hot) the equipment insights module maps the root cause (e.g., refrigerant leak resulting in ineffective cooling for the customer) to the workflow.

The equipment insights mapping module 638 is configured to receive predictive and actionable equipment insights 414 from the normalized, correlated and de-duplicated incident generation module 400 of FIG. 5. For example, a predictive and actionable equipment insights 414 may be early stage refrigeration leak recommendation and as the condition of equipment changes due to this root cause, criticality statuses are assigned by predictive actionable system to the disparate workflow system 620 by equipment insight mapping module to change priorities of workflow execution

The scope and objective determination module 639 may be configured to establish a scope and an objective for each disparate workflow system 620. For every trigger resulting in a workflow execution, a scope is defined, and an objective is tracked. For example, a customer is reporting an issue of being "HOT", the objective is to return environment to normal for the customer. Whereas this objective needs to specify scope of repair for the technician. The scope would be for example: fix refrigerant leakage in roof top unit (RTU) 1, Damper stuck in RTU2, correct setting for RTU3 where RTU1, RTU2 and RTU3 are serving same customer reporting the issue. The scope and objective determination module 639 establishes an objective of each workflow trigger and equipment insight relevant to the workflow trigger, assigns scope for fulfillment of the objective, and defines conditions at which the objective will be fulfilled.

The scope and objective determination module 639 is configured to received contract data 633. Contract data represents prior agreed terms and conditions with customers/users of service levels to be achieved by these workflow systems. For example, (1) for a customer issue it could be an agreed response and a resolution time; (2) for a parts replacement workflow it could be a time to deliver parts; and (3) for a field workorder it could be time to visit a site.

The workflow unification system 600 also includes a mirror and merged process (P_{MN}) 640. Pₘₙ is a representation of merged process which takes process P₁ to Pₙ. The purpose of workflow unification system 600 is to achieve objectives of improving comfort, health & safety for end user, equipment performance and reducing energy & maintenance cost. These objectives often contradict, overlap & run in disparate independent systems creating duplicate/cross purpose work items leading to waste in resources required for upkeep of equipment. The goal is to remove duplication, make the process agile and proactive by triggering repair and improvement process by predictive service actionable and plan resolution before customer is impacted. As different workflows get triggered with the equipment moving through its failure lifecycle, the goal is to resolve commonality of obj ective and scope and to sequence or modify those workflows to achieve a common objective in most optimum manner.

The mirror and merged process 640 includes a process mirroring and merging module 650 and a merge and mirrored process enrichment and enhancement module 660.

The process mirroring and merging module 650 is configured to perform the unification of the disparate workflow systems 620 triggered by sequencing them in right manner, passing information as necessary to different workflow systems for fulfillment of objective and scope, and finally representing a unified version of all the workflows as a single mirrored and de-duplicated workflow of the unified workflow. The process mirroring and merging module 650 may include a workflow connections/interlinking module 652, a source de-duplication modules 654, a scope tracking/allocation resource pool 656.

The workflow connections/interlinking module 652 may be configured to establish the connections between each disparate workflow systems 620. Each of the disparate workflow systems 620 are connected and interlinked and the workflow connections/interlinking module 652 determines that connection and interlinking. The connected and interlinking of the disparate workflow systems arranges the disparate workflow systems 620 into a sequence that has a beginning and an end that bookends a single unified workflow and defines in what order the unified workflow will operate (i.e., carry out the disparate workflow systems 620 that make up the unified workflow). The workflow connections/interlinking module 652 determines at what point one disparate workflow system 620 ends and another disparate workflow system 620 begins.

The source de-duplication modules 654 may be configured to remove any aspects of the disparate workflow systems 620 that are duplications. For example, two users may be complaining about the same problem. In a further example, while a customer is reporting an issue, information required for the customer is "what would be the repair time?". For which, a simple diagnostic check is to provide information about what would be approximate repair time. The same check happens when a technician visits the site and evaluates repair needs in more details and estimated time may need to be revised. A predictive system can predict the root cause which has a similar objective of what is the repair need.

The scope tracking/allocation resource pool 656 may be configured to track the scope of each disparate workflow system 620 and what resources from the resource pool are needed.

The resource pool association and allocation module 636 and the scope and objective determination module 639 looks at triggered disparate workflows 620 individually and the SACT insights map to identify objective and scope required for each workflow system. Whereas the scope tracking/allocation resource pool 656 looks at duplication of objectives and scope as determined by the resource pool association and allocation module 636 and the scope and objective determination module 639, and then determines what is the right sequence for individual disparate workflows 620 and information sharing between the disparate workflows 620. The scope tracking/allocation resource pool 656 can also address future expected workflow triggers for which the scope can be addressed during the current requirement of objective with incremental resources which will save resources and avoid future workflow triggers.

The merge and mirrored process enrichment and enhancement module 660 is configured to merge all of the disparate workflow systems 620 into a single process. The merge and mirrored process enrichment and enhancement module 660 may include an equipment insights (SACT) aggregation and effectiveness assignment module 662 and a scope aggregation and completeness assignment module 664.

The equipment insights (SACT) aggregation and effectiveness assignment module 662 may be configured to enhance the unified workflow with equipment health status from the SACT.

The scope aggregation and completeness assignment module 664 may be configured to determine whether the merged disparate workflow systems is complete or at what state it is. The merged disparate workflow may be referred to as a unified workflow.

The unified workflow from the mirror and merged process Pmn 640 may be sent to a unified workflow status tracking module 672. The unified workflow status tracking module 672 may include a scope and effectiveness. The effectiveness is a combination of scope completion matrices derived from equipment insights and time and resources required to complete scope or avoid scope (e.g., a future customer issue). The unified workflow status tracking module 672 may configured to track a status of the unified workflow. The status of unified workflow is the combined progress steps representing all workflows which are unified together. The status of the unified workflow can either trigger additional workflows to modify as necessary to complete the scope of the unified workflow and improve its effectiveness.

The output from the unified workflow status tracking module 672 may be sent to a unified workflow optimization module 680. If the scope of the unified workflow is nearly completed then the unified workflow may be sent to the unified workflow optimization module 680.

The unified workflow optimization module 680 may be configured to optimize the unified workflow. While the process of mirroring and merging module de-duplicates and sequences the disparate workflows 620, the data collected from plurality of disparate ecosystems goes through this unified workflow optimization module which learns from the data and feedback received from the ecosystem via learning module. It evaluates alternative sequences and resource allocation scenarios to fulfill objectives with optimum resource allocation. With this optimized learning and measurements to track learning through a measurements module 682, the system is able to predict scope and objective failure and provide recommendations with respect to additional workflow triggers and resource group reallocation requirement.

The unified workflow optimization module 680 may include a measurements module 682 and a learning module 690 for recommendations and insights.

Measurements are around comprehensiveness of scope completion, resources required for completion, objective fulfillment including feedback from end user. The measurements module 682 is configured to provide measurements on above criteria at each stage of the unified workflow to compare and benchmark for each stage of unified workflow using past/historical data. This data is provided to the learning system for decision making on additional optimization potential or additional workflow requirements through objective and service level failure prediction module and insights module for providing recommendations to prevent failure and objective achievement effectively and comprehensively. The measurements modules 683 may include a pre-process and post process KPI calculation module 684, a workflow effectiveness validation module 686, and a benchmarking module 688.

The pre-process and post process KPI calculation module 684 is configured to measure the effectiveness of the pre-process and post-process. The unified workflow is broadly categorized with respect to progress of objectives in three parts: pre-process, in-process and post-process. Pre-process represents unification and de-duplication activity in the workflow triggering phase. In-process represents unification, de-duplication and execution activity during the workflow execution phase and post-process represents activity in evaluation, validation, and close-out phase after execution. This categorization is during the merging process and continues during the unified workflow execution. The workflow effectiveness validation module 686 is configured to determine the effectiveness of the unified workflow, which is whether the unified workflow is doing its job.

The benchmarking module 688 is configured to compare the unified workflow with past history of similar process, what time, what efforts, and what resources are taken and determine whether there is a better way for performing the unified workflow. This may mean reorganization of the unified workflow.

The learning module 690 for recommendations and insights is configured to learn and start to provide objective failure predictions of where the unified workflow may falter or fail.

The learning module 690 for recommendations and insights may include an objective and service level agreed (SLA) failure prediction module 692, an effectiveness and comprehensiveness realization insights module 694, and a resource group performance module 696.

The objective and SLA failure prediction module 692 is configured to generate objective failure predictions of where the unified workflow may falter or fail.

The effectiveness and comprehensiveness realization insights module 694 is configured to determine an effectiveness and a comprehensiveness of the unified workflow and determine what needs to be done at each step to make the unified workflow comprehensive and effective. The resource group performance module 696 is configured to evaluate which resources are being deployed, whether the resources are performing, and whether there is an improvement required.

Insight and recommendation integrations from the unified workflow optimization module 680 may be transmitted back to the disparate workflow systems 620 as additional workflow triggers in block 674 to modify workflow paths as necessary to complete scope and improve effectiveness.

The unified workflow status tracking module 672 and block 674 are primarily the post-process execution element which utilizes the measurement modules 682, the learning and insights modules 690 to determine a close-out, reorganization, or additional workflow triggers and resource group reallocation requirements.

Referring now to FIG. 8, with continued reference to FIGS. 1-7, a flow chart of a method 700 of streamlining multiple disparate workflows generated by equipment 104 is illustrated, according to an embodiment of the present invention. In an embodiment, the method 700 is performed by a system, such as the server 108 of FIG. 2.

At block 704, workflow trigger sources 610 are received from an equipment 104.

At block 706, two or more disparate workflow systems 620 are generated in response to the workflow trigger sources 610.

At block 708, the two or more disparate workflow systems 620 are transformed into a single unified workflow. Block 708 may include removing any aspects of the two or more disparate workflow systems 620 that are duplications. Block 708 may also include arranging the two or more disparate workflow systems 620 into a sequence having a beginning and an end that bookends the single unified workflow and defines in what order the unified workflow will operate.

At block 710, the unified workflow is performed for the equipment 104. FIG. 7 is an example of how the unified workflow would be performed.

The method 700 may also include that each of the two or more disparate workflow systems 620 are translated into a common uniform process nomenclature. The method 700 may also include that each of the two or more disparate workflow systems 620 are categorized. The method 700 may also include that an effectiveness of the unified workflow is determined.

The method 700 may further include that the unified workflow is reorganized based on the effectiveness of the unified workflow to fine tune and optimize the unified workflow and future workflow possibilities.

The method 700 may further include learning from historical data and feedback received from the ecosystem to predict scope and objective failure, and then providing recommendations with respect to additional workflow triggers and resource group reallocation requirements.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

As described above, embodiments can be in the form of processor-implemented processes and devices for practicing those processes, such as a processor.

Embodiments can also be in the form of computer program code (e.g., computer program product) containing instructions embodied in tangible media (e.g., non-transitory computer readable medium), such as floppy diskettes, CD ROMs, hard drives, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

While the present invention has been described with reference to an exemplary embodiment or embodiments, it will be understood by those skilled in the art that various changes may be made and equivalents may be substituted for elements thereof without departing from the scope of the present invention. In addition, many modifications may be made to adapt a particular situation or material to the teachings of the present invention without departing from the essential scope thereof. Therefore, it is intended that the present invention not be limited to the particular embodiment disclosed as the best mode contemplated for carrying out this present invention, but that the present invention will include all embodiments falling within the scope of the claims.

## Claims

1. A method (700) of streamlining multiple disparate workflows (620) generated by equipment (104), the method comprising:
receiving (704) workflow trigger sources (610) from the equipment (104);
generating (706) two or more disparate workflow systems (620) in response to the workflow trigger sources (610);
transforming (708) the two or more disparate workflow systems (620) into a single unified workflow; and
performing (710) the unified workflow for the equipment (104).

2. The method of claim 1, wherein transforming the two or more disparate workflow systems (620) into the single unified workflow further comprises:
removing any aspects of the two or more disparate workflow systems (620) that are duplications.

3. The method of claim 1 or 2, further comprising:
translating each of the two or more disparate workflow systems (620) into a common uniform process nomenclature; and/or
categorizing each of the two or more disparate workflow systems (620).

4. The method of any of claims 1 to 3, wherein transforming the two or more disparate workflow systems (620) into the single unified workflow further comprises:
arranging the two or more disparate workflow systems (620) into a sequence having a beginning and an end that bookends the single unified workflow and defines in what order the unified workflow will operate.

5. The method of any of claims 1 to 4, further comprising:
determining an effectiveness of the unified workflow; and
optionally reorganizing the unified workflow based on the effectiveness of the unified workflow.

6. The method of any of claims 1 to 5, further comprising:
learning from historical data and feedback received from the ecosystem to predict scope and objective failure; and
providing recommendations with respect to additional workflow triggers (610) and resource group reallocation requirements.

7. A system (600) for streamlining multiple disparate workflows (620) generated by equipment (104), the system comprising:
a processor; and
a memory comprising computer-executable instructions that, when executed by the processor, cause the processor to perform operations, the operations comprising:
receiving workflow trigger sources (610) from the equipment (104);
generating two or more disparate workflow systems (620) in response to the workflow trigger sources (610);
transforming the two or more disparate workflow systems (620) into a single unified workflow; and
performing the unified workflow for the equipment (104).

8. The system (600) of claim 7, wherein organizing the transforming the two or more disparate workflow systems (620) into the single unified workflow further comprises:
removing any aspects of the two or more disparate workflow systems (620) that are duplications.

9. The system of claim 7 or 8, wherein the operations further comprise:
translating each of the two or more disparate workflow systems (620) into a common uniform process nomenclature; and/or
categorizing each of the two or more disparate workflow systems (620).

10. The system of any of claims 7 to 9, wherein the transforming the two or more disparate workflow systems (620) into the single unified workflow further comprises:
arranging the two or more disparate workflow systems (620) into a sequence having a beginning and an end that bookends the single unified workflow and defines in what order the unified workflow will operate.

11. The system of any of claims 7 to 10, wherein the operations further comprise:
determining an effectiveness of the unified workflow; and
optionally reorganizing the unified workflow based on the effectiveness of the unified workflow.

12. The method of any of claims 7 to 11, wherein the operations further comprise:
learning from historical data and feedback received from the ecosystem to predict scope and objective failure; and
providing recommendations with respect to additional workflow triggers (610) and resource group reallocation requirements.

13. A computer program product tangibly embodied on a non-transitory computer readable medium, the computer program product including instructions that, when executed by a processor, cause the processor to perform operations comprising:
receiving workflow trigger sources (610) from an equipment (104);
generating two or more disparate workflow systems (620) in response to the workflow trigger sources (610);
transforming the two or more disparate workflow systems (620) into a single unified workflow; and
performing the unified workflow for the equipment (104).

14. The computer program product of claim 13, wherein organizing the transforming the two or more disparate workflow systems (620) into the single unified workflow further comprises:
removing any aspects of the two or more disparate workflow systems (620) that are duplications

15. The computer program product of claim 13 or 14, wherein the operations further comprise:
translating each of the two or more disparate workflow systems (620) into a common uniform process nomenclature; and/or
categorizing each of the two or more disparate workflow systems (620).
